(19) Europäisches Patentamt
European Patent Office
Office européen des brevets

(11) **EP 4 641 648 A1**

(12) **EUROPEAN PATENT APPLICATION**
published in accordance with Art. 153(4) EPC

(43) Date of publication:
**29.10.2025 Bulletin 2025/44**

(21) Application number: 24852207.0

(22) Date of filing: **02.08.2024**

(51) International Patent Classification (IPC):
**H01M 4/04** *(2006.01)*    **G06Q 50/04** *(2012.01)*
**B65H 43/04** *(2006.01)*

(52) Cooperative Patent Classification (CPC):
**B65H 43/04; G06Q 50/04; H01M 4/04;** Y02E 60/10;
Y02P 70/50

(86) International application number:
**PCT/KR2024/011361**

(87) International publication number:
**WO 2025/033853 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  07.08.2023  KR 20230102897

(71) Applicant: **LG Energy Solution, Ltd.
Seoul 07335 (KR)**

(72) Inventors:
• **JEON, Gi Yeong
Daejeon 34122 (KR)**

• **KIM, Min Su
Daejeon 34122 (KR)**
• **SU, Jun Hyo
Daejeon 34122 (KR)**
• **CHOI, Ee Beom
Daejeon 34122 (KR)**
• **PARK, Su Wan
Daejeon 34122 (KR)**

(74) Representative: **BCKIP Part mbB
MK1
Landsbergerstraße 98, 3.Stock
80339 München (DE)**

(54)    **METHOD FOR MANUFACTURING SECONDARY BATTERY**

(57)    According to exemplary embodiments of the present invention, a secondary battery manufacturing method is provided. The method includes the steps of: collecting data from an electrode sheet on which an electrode process is performed; calculating a production amount corresponding to the length of a portion of the electrode sheet on which the electrode process has been performed; and calculating a loss amount and a defect amount of the electrode sheet.

[FIG. 4]

**Description**

[Technical Field]

The present invention relates to a method of manufacturing a secondary battery. The present application claims the benefit of priority based on Korean Patent Application No. 10-2023-0102897, filed on August 7, 2023, and the entire contents of the Korean patent application is incorporated herein by reference.

[Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. Among these processes, the electrode process is a key process in determining the yield and performance of a battery cell. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

[Disclosure]

[Technical Problem]

The present invention is directed to providing a secondary battery manufacturing method using a roll map including information about quality and defects in an electrode manufacturing process.

[Technical Solution]

Example embodiments of the present invention provide a secondary battery manufacturing method. The secondary battery manufacturing method includes collecting data from an electrode sheet on which an electrode process is performed, calculating an amount of production corresponding to a length of a part of the electrode sheet on which the electrode process is performed, and calculating an amount of loss and an amount of defects of the electrode sheet.

The electrode process may include forming a top coating on a top surface of an electrode plate of the electrode sheet and a bottom coating on a bottom surface of the electrode plate opposite to the top surface, and parts of the electrode sheet spaced apart from the top coating and the bottom coating may be excluded from the amount of production.

The electrode process may include forming a top coating on a top surface of an electrode plate of the electrode sheet and a bottom coating on a bottom surface of the electrode plate opposite to the top surface, and a part of the electrode sheet that includes the top coating or the bottom coating may be added to the amount of production.

The electrode process may include forming a top coating on a top surface of an electrode plate of the electrode sheet and a bottom coating on a bottom surface of the electrode plate opposite to the top surface, and a first part of the electrode sheet including the top coating and spaced apart from the bottom coating may be added to the amount of loss.

The electrode process may include forming a top coating on a top surface of an electrode plate of the electrode sheet and a bottom coating on a bottom surface of the electrode plate opposite to the top surface, and a second part of the electrode sheet spaced apart from the top coating and including the bottom coating may be added to the amount of loss.

The amount of defects may correspond to a length of a part of the electrode sheet including the defects.

The amount of defects may be calculated based on compressed measurement data of the electrode sheet, and the compressed measurement data may include a judgement value calculated based on raw measurement datpind coordinates matching the judgement value.

The amount of defects may be calculated based on coordinate-related inspection data of the electrode sheet, and the coordinate-related inspection data may include a judgement value indicating a defect and coordinates matching the judgement value.

The secondary battery manufacturing method may further include calculating an amount of good-quality products, which corresponds to a length of a normal part of the electrode sheet, based on the amount of production, the amount of loss, and the amount of defects of the electrode sheet.

The sum of the amount of good-quality products, the amount of loss, and the amount of defects may be equal to the amount of production.

Example embodiments provide a secondary battery manufacturing method. The secondary battery manufacturing method may include: collecting data from an electrode sheet on which a coating process is performed, in which in the coating process, a top coating is formed on a top surface of an electrode plate of the electrode sheet and a bottom coating is formed on a bottom surface of the electrode plate of the electrode sheet, and the data includes top coating data indicating the top coating, bottom coating data indicating the bottom coating, and coordinate-related inspection data of the electrode sheet; calculating an amount of production based on the top coating data and the bottom coating data; calculating an amount of exclusion of the electrode sheet; and calculating an amount of good-quality products, which is an amount of a normal part of the electrode sheet, based on the amount of production and the amount of exclusion.

A part of the electrode sheet that includes either the top coating or the bottom coating may be added to the amount of production.

A part of the electrode sheet that only includes one of the top coating and the bottom coating may be added to the amount of exclusion.

The coordinate-related inspection data may include a judgement value indicating a defect and coordinates matching the judgement value, and an amount of defects, which corresponds to a length of a part of the electrode sheet, which includes defects and is calculated based on the coordinate-related inspection data, may be added to the amount of exclusion.

[Advantageous Effects]

Example embodiments of the present invention provide a secondary battery manufacturing method capable of enabling feedback, feedforward, and tracking of an electrode process.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

FIG. 1 illustrates a secondary battery manufacturing system according to example embodiments.
FIG. 2 is a cross-sectional view of an electrode sheet.
FIG. 3 illustrates a top surface and a bottom surface of an electrode sheet.
FIG. 4 is a flowchart of a secondary battery manufacturing method according to example embodiments.
FIG. 5 illustrates a picture displayed on a client device.

[Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

(First Embodiment)

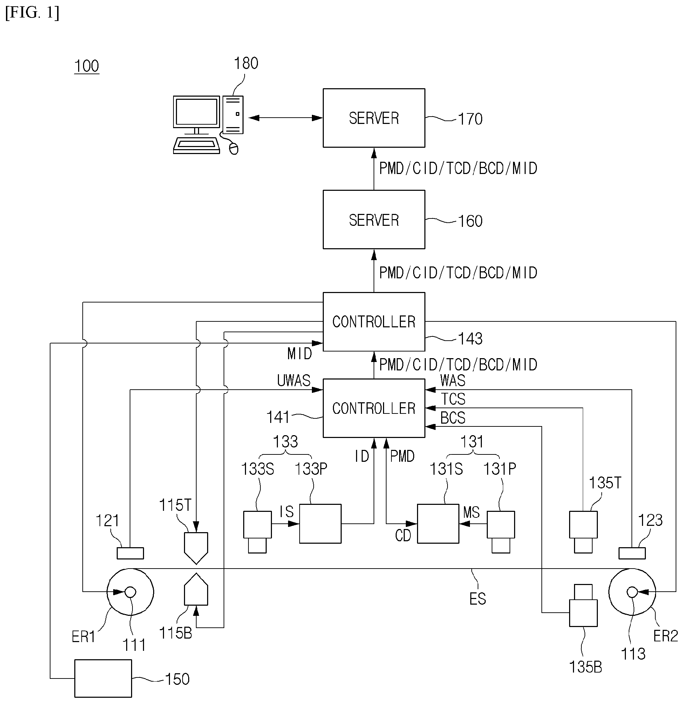

FIG. 1 illustrates a secondary battery manufacturing system 100 according to example embodiments.

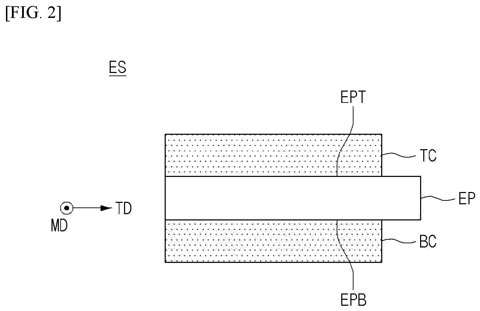

FIG. 2 is a cross-sectional view of an electrode sheet ES.

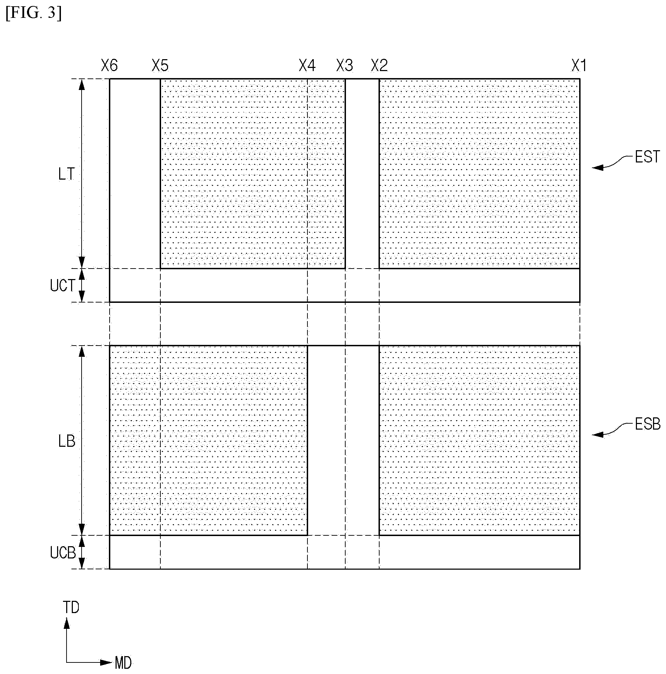

FIG. 3 illustrates a top surface EST and a bottom surface ESB of the electrode sheet ES.

Referring to FIGS. 1 to 3, the secondary battery manufacturing system 100 may include an unwinder 111, a rewinder 113, die coaters 115T and 115B, a first rotary encoder 121, a second rotary encoder 123, a measuring device 131, an inspector 133, coating sensors 135T and 135B, a first controller 141, a second controller 143, an input device 150, servers 160 and 170, and a client device 180.

The unwinder 111 may be configured to unwind the electrode sheet ES from an electrode roll ER1. The rewinder 113 may be configured to wind the electrode sheet ES into an electrode roll ER2. Accordingly, the electrode sheet ES may be moved between the unwinder 111 and the rewinder 113.

A process of manufacturing a secondary battery (e.g., an electrode process) may be performed on the electrode sheet ES. The electrode process is performed on the electrode sheet ES unwound from the electrode roll ER1 and wound into the electrode roll ER2 and thus may be a roll-to-roll process.

The coating process may be performed on the electrode sheet ES. The coating process may be performed by the die coaters 115T and 115B. The coating process is a process of applying a coating material such as an electrode slurry to the electrode sheet ES. The electrode slurry may include an electrode active material, a conductive agent, a binder, and a solvent. The electrode slurry may be provided by dissolving the electrode active material, the conductive additive, the binder, etc. in the solvent.

The die coater 115T may provide the electrode slurry on a top surface EPT of an electrode plate EP and thus a top coating TC may be formed on the top surface EPT of the electrode plate EP. The electrode sheet ES may include a coated lane LT and an uncoated part UCT. The coated lane LT may be a part of the electrode plate EP to which the top coating TC is applied or is to be applied. The uncoated part UCT may be a part of the electrode sheet ES that does not include the top coating TC (i.e., a part of the electrode sheet ES spaced apart from the top coating TC).

The die coater 115B may provide the electrode slurry on the bottom surface EPB of the electrode plate EP and thus a bottom coating BC may be formed on the bottom surface EPB of the electrode plate EP. The electrode sheet ES may include a coated lane LB and an uncoated part UCB. The coated lane LB may be a part of the electrode plate EP to which the bottom coating BC is applied or is to be applied. The uncoated part UCB may be a part of the electrode sheet ES to which the bottom coating BC is not provided (i.e., a part of the electrode sheet ES spaced apart from the bottom coating BC).

According to example embodiments, each of the coated lanes LT and LB and the uncoated parts UCT and UCB may extend in a machine direction MD that is a moving direction (or a longitudinal direction) of the electrode sheet ES. Each of the coated lanes LT and LB and the uncoated parts UCT and UCB may be divided in a transverse direction TD (or a width direction) of the electrode sheet ES.

The first rotary encoder 121 may be configured to sense an amount of the electrode sheet ES unwound from the first electrode roll ER1 by the unwinder 111. Accordingly, the first rotary encoder 121 may be configured to generate an input amount signal UWAS indicating an unwinding amount of the electrode sheet ES. The first rotary encoder 121 may be configured to transmit the input amount signal UWAS to the first controller 141. The first controller 141 may be configured to collect input amount data based on the input amount signal UWAS of the electrode sheet ES. The input amount data may represent an amount of material (i.e., the electrode roll ER1) put into the secondary battery manufacturing system 100 to manufacture a secondary battery.

The second rotary encoder 123 may be configured to sense an amount of the electrode sheet ES wound into the electrode roll ER2 by the rewinder 113. Accordingly, the second rotary encoder 123 may be configured to generate an exhaustion amount signal WAS indicating a winding amount of the electrode sheet ES. The second rotary encoder 123 may be configured to transmit the exhaustion amount signal WAS to the first controller 141. The first controller 141 may be configured to collect exhaustion amount data based on the exhaustion amount signal WAS of the electrode sheet ES. The exhaustion amount data may indicate the amount of the electrode sheet ES wound by the rewinder 113.

In some cases, a part of the electrode sheet ES may be scrapped and thus the amount of the electrode sheet ES unwound by the unwinder 111 may be different from the amount of the electrode sheet ES wound by the rewinder 113. In addition, when the electrode sheet ES is stretched due to pressure in a subsequent process such as the roll pressing process, the amount of the electrode sheet ES unwound by the unwinder 111 may be different from the amount of the electrode sheet ES wound by the rewinder 113.

As a non-limiting example, the first controller 141 and the second controller 143 may be programmable logic controllers (PLCs). The PLC is a special type of microprocessor-based controller that stores instructions using a programmable memory and implements functions such as logic, sequencing, timing, counting and arithmetic operations to control machines and processes. It is easy to operate and program the PLC.

The first and second controllers 141 and 143 may include a power supply, a CPU, an input interface, an output interface, a communication interface, and memory devices. The power supply may be configured to supply power to the other components of the first and second controllers 141 and 143, such as the CPU, the input interface, the output interface, the communication interface, and the memory devices, to operate the first and second controllers 141 and 143. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through the output module. The communication interface may be configured to transmit and receive data between the first and second controllers 141 and 143 or between the second controller 143 and the server 160.

However, embodiments are not limited thereto, and the first and second controllers 141 and 143 may each include one of a simple controller, a complex processor such as a microprocessor, a CPU or a GPU, a processor configured by software, dedicated hardware, and firmware. The first and second controllers 141 and 143 may be implemented, for example, by a general-purpose computer or application-specific hardware such as a digital signal processor (DSP), a field-programmable gate array (FPGA) or an application specific integrated circuit (ASIC).

The first controller 141 may be configured to collect coordinate data CD of the electrode sheet ES, based on one of the input amount signal UWAS and the exhaustion amount signal WAS of the electrode sheet ES. For example, the first controller 141 may determine a moving distance of the electrode sheet ES based on the exhaustion amount signal WAS of the electrode sheet ES and thus a position of a portion of the electrode sheet ES wound by the rewinder 113 on the electrode sheet ES may be determined at each time point at which the coating process is performed. Hereinafter, the technical idea of the present invention will be described with respect to an embodiment in which the first controller 141 collects the coordinate data CD based on the exhaustion amount signal WAS of the electrode sheet ES.

The coordinate data CD may include coordinates matching each part of the electrode sheet ES. That is, arbitrary points on the electrode sheet ES may be given coordinates. The coordinates may be one-dimensional (1D) quantities in a machine direction MD in which the electrode sheet ES is moved (or a longitudinal direction of the electrode sheet ES) but are not limited thereto. The coordinates may be two-dimensional (2D) quantities in the machine direction MD and a transverse direction TD of the electrode sheet ES (or a width direction of the electrode sheet ES).

The measuring device 131 may be configured to measure the electrode sheet ES to collect measurement data of the electrode sheet ES. The measurement data may be raw data, and evaluation and judgement values of a part of the electrode sheet ES from which the measurement data is collected may be determined by processing the measurement data. As a non-limiting example, the measuring device 131 may be one of a web gauge and a thickness meter that are manufactured by Thermofisher Scientific.

The measuring device 131 may be configured to scan the electrode sheet ES. During the scanning of the electrode sheet ES, the measuring device 131 may move in the transverse direction TD of the electrode sheet ES. During one scanning, a sensing part 131S of the measuring device 131 may move from one end of the electrode sheet ES in the transverse direction TD to another end of the electrode sheet ES in the transverse direction TD.

While the measuring device 131 performs scanning in the transverse direction TD, the electrode sheet ES may be moved in the machine direction MD by the unwinder 111 and the rewinder 113. Accordingly, a part of the electrode sheet ES measured by the measuring device 131 may have a zigzag shape.

The measurement data may include a result of inspection expressed numerically. The measurement data may include data of a loading amount of a coating material on the electrode sheet ES and thickness data of the coating material on the electrode sheet ES. Here, the loading amount is an amount of the coating material loaded per unit area of the electrode sheet ES and may be an area density of the coating material

The measuring device 131 may include the sensing part 131S and a processor 131P. The sensing part 131S may be configured to detect a physical quantity of the electrode sheet ES to generate a measurement signal MS. For example, the sensing part 131S may include a time delay and integration (TDI) camera, a complementary metal oxide semiconductor (CMOS) image sensor, a time-of-flight (TOF) sensor, etc. The sensing part 131S may include an emitter and a receiver that are configured to perform measurement using a non-destructive signal such as ultrasound waves, microwaves, terahertz waves, or infrared rays. The sensing part 131S may include analog and/or digital sensors, such as a biosensor, a chemical sensor, a composition sensor, a current and/or power meter, an air quality sensor, a gas sensor, a hall effect sensor, a brightness level sensor, and an optical sensor. The sensing part 131S may include a pressure sensor, a temperature sensor, an ultrasonic sensor, a proximity sensor, a door state sensor, a motion tracking sensor, a humidity sensor, a visible light and infrared sensor, a camera, etc.

The processor 131P may be configured to receive the measurement signal MS sensed by the sensing part 131S to collect measurement data. The processor 131P may be configured to collect measurement data based on the measurement signal MS. The processor 131P may be connected to the sensing part 131S by wire or wirelessly. The processor 131P may be configured to calibrate the measurement data by adding an offset measurement amount to each of measured values of the measurement data. Due to the progress of a process and the aging of equipment, the measured values of the measurement data may be different from actual values. The processor 131P may calibrate the measured values of the measurement data based on the offset measurement amount to improve the reliability of the measurement data. The offset measurement amount may be determined based on information given to an equipment system by a method such as a sample test.

The inspector 133 may be configured to inspect the electrode sheet ES to collect inspection data ID. The inspector may include a color sensor, a joint sensor, a datum point sensor, or a vision machine.

For example, the inspection data ID may include data about the appearance of the electrode sheet ES collected by an image-based inspection device such as a vision machine, data about disconnections and joints of the electrode sheet ES, data about a part of the electrode sheet ES on which sampling inspection is performed, data about a part of the electrode sheet ES to be scrapped, data about a scrapped part of the electrode sheet ES, data about whether the coating material and the insulating material on the electrode sheet ES are defective or not, data about datum points indicating a position on the electrode sheet ES, and defect data such as a pinhole defect, a crater defect, a line defect, a crack defect, a side ring defect, an island defect, a folded defect, a wrinkle defect, a pit defect, and a scratch defect. The inspection data ID may include a judgement value of the quality of a part of the electrode sheet ES (e.g., a value indicating whether there is a defect or not and the type of the defect) .

Here, the data of the appearance of the electrode sheet ES may include width data of the electrode sheet ES determined based on an image-based inspection, width data of the insulating layer on the electrode sheet ES, overlay data indicating an overlapping width between the coating material (i.e., the electrode slurry) and the insulating layer on the electrode sheet ES, and mismatch data indicating misalignment between coated lanes on the bottom surface ESB of the electrode sheet ES and coated lanes on the top surface EST of the electrode sheet ES. The datum points may be formed on the electrode sheet ES at certain intervals, and other elements on the electrode sheet ES may be located based on the datum points. As a non-limiting example, the secondary battery manufacturing system 100 may include a separate server configured to store original inspection data (e.g., an image of a defective part of the electrode sheet ES).

The inspection data ID may include width data of coated lanes and uncoated parts of the electrode sheet ES determined based on the image-based inspection, size data such as a width of the insulating layer and an overlapping width between the coating material and the insulating layer, mismatching data between the coated lanes on the top surface EST of the electrode sheet ES and the coated lanes on the bottom surface ESB of the electrode sheet ES, and the like.

The inspector 133 may include a sensing part 133S and a processor 133P. The sensing part 133S may be configured to detect the electrode sheet ES to generate an inspection signal IS. For example, the sensing part 133S may include one of the sensors described above in relation to the sensing part 131S.

The processor 133P may be configured to receive and process the raw inspection signal IS sensed by the sensing part 133S to collect the inspection data ID. The processor 133P may include an algorithm for processing an image of the part of the electrode sheet ES to determine an inspection value of the inspection data ID or a model (e.g., an artificial neural network) trained to determine an inspection value based on the image of the part of the electrode sheet ES.

The measurement data and the inspection data ID described above may be time series data. The measurement data and the inspection data ID may be temporally ordered. The measurement data and the inspection data ID may be indexed in time order. The measurement data may include measured values and a time value (or time values) matching the measured values. The inspection data ID may include inspection values and a time value (or time values) matching the inspection values. That is, the measurement data and the inspection data ID may be stored based on point in times when measurement and inspection are performed and be related to time. The time values of the measurement data and the inspection data ID may be, for example, in the form of timestamp but are not limited thereto.

For example, the measurement data (e.g., data of an amount of loading on the electrode sheet ES or thickness data of the electrode sheet ES) may include a series of measured values and time values related to the series of measured values. The measured values and the time values may be matched in a one-to-one manner but are not limited thereto. The measured values may be matched to a single timestamp, which indicates a start point of the measurement, in a many-to-one manner. As another example, the defect data may include a value indicating a defect and a time value related to the value indicating the defect. Here, the value indicating the defect includes at least one of information as to whether there is a defect or information about the type of the defect.

The coating sensor 135T may be configured to detect a top coated lane LT on the top surface EST of the electrode sheet ES. The coating sensor 135T may be configured to generate a top coating detection signal TCS for distinguishing between a part of the top coated lane LT that includes the top coating TC and a part of the top coated lane LT that does not include the top coating TC. The coating sensor 135T may be configured to transmit the top coating detection signal TCS to the first controller 141.

The coating sensor 135B may be configured to detect a bottom coated lane LB on the bottom surface ESB of the electrode sheet ES. The coating sensor 135B may be configured to generate a bottom coating detection signal BCS for distinguishing between a part of the bottom coated lane LB that includes the bottom coating BC and a part of the bottom coated lane LB that does not include the bottom coating BC. The coating sensor 135B may be configured to transmit the bottom coating detection signal BCS to the first controller 141.

The first controller 141 may be in operative communication with the first and second rotary encoders 121 and 123, the measuring device 131, the inspector 133, and additional measuring devices and inspectors through a wired or wireless data network. The data network may be unidirectional or bidirectional. The data network may be implemented by a public network and/or a specialized network using physical channels, WiFi, Bluetooth, and/or other frequency bands. The first and second rotary encoders 121 and 123, the measuring device 131, the inspector 133, and the additional measuring devices and inspectors may be configured to collect data from equipment in the secondary battery manufacturing system 100, a workpiece, an intermediate product, and a product or to generate a signal for collecting data. The first controller 141 may be configured to transmit the coordinate data CD to the processor 131P.

The processor 131P may be configured to generate coordinate-related measurement data based on the coordinate data CD and the measurement data. The processor 131P may be configured to connect the coordinate data CD with the measurement data to generate the coordinate-related measurement data. In general, the measurement data may be processed based on a trigger point. Examples of the processing of the measurement data may include storing the measurement data, manipulating the measurement data (e.g., generating the coordinate-related measurement data), and transmitting the measurement data.

As a non-limiting example, a trigger point for processing the measurement data may be the completion of scanning. For example, the sensing part 131S may scan the electrode sheet ES in the transverse direction TD, and the measurement data may be stored, processed, manipulated, and transmitted whenever scanning is performed. As another example, the trigger point may be completion of performing scanning multiple times or partial completion of scanning.

The electrode sheet ES may be divided into a plurality of sections based on scanning performed by the sensing part 131S of the measuring device 131. That is, each of the plurality of sections may correspond to one scanning performed by the sensing part 131S.

According to example embodiments, the processor 131P may be configured to calibrate the coordinate data CD, based on a position of the sensing part 131S. More specifically, the measuring device 131 may be configured to calibrate the coordinate data CD based on an offset length, so that coordinates of the coordinate data CD may be connected with the measured values of the measurement data.

The measuring device 131 may collect measurement data of a part of the electrode sheet ES corresponding to (e.g., overlapping) the sensing part 131S, and the coordinate data CD may be collected by the second rotary encoder 123 spaced apart from the sensing part 131S as described above. Accordingly, a part of the electrode sheet ES corresponding to the coordinate data CD and a part of the electrode sheet ES corresponding to the measurement data, which are collected at the same point in time, may be different from each other.

According to example embodiments, the coordinate-related measurement data may be provided by calibrating the coordinate data CD, which is collected at the same point in time as the measurement data, based on the offset length and connecting the calibrated coordinate data CD with the measurement data. The coordinate-related measurement data may include measured values, a time value matching the measured values, a start coordinate, and an end coordinate. The time value may be a timestamp indicating a date and time when the measurement data is collected. The start coordinate and the end coordinate may indicate a start point and an end point of the part of the electrode sheet ES from which the measurement data is collected. The start coordinate and the end coordinate may be determined based on the calibrated coordinate data CD. The coordinate-related measurement data may include a measuring device identifier (ID) identifying the measuring device 131 and an equipment ID identifying the secondary battery manufacturing system 100. The coordinate-related measurement data may be stored in the server 170 or stored in a separate server provided to store original data.

As another example, the sensing part 131S may be directly connected to a position measuring device such as the first and second rotary encoders 121 and 123 or be configured to sense a datum point on the electrode sheet ES. In this case, the processor 131P may be configured to collect the coordinate-related measurement data based on the measurement signal MS transmitted from the sensing part 131S.

A plurality of guide rolls may be interposed between the sensing part 131S and the rewinder 113 to define a moving path of the electrode sheet ES. Accordingly, an offset length of the sensing part 131S may be defined as a length of the electrode sheet ES between a part of the electrode sheet ES detected by the sensing part 131S and the rewinder 113. The offset length may be equal to or greater than a linear distance between the sensing part 131S and the rewinder 113.

The processor 131P may be configured to generate compressed measurement data PMD based on the measurement data and the coordinate data CD. The compressed measurement data PMD may include a representative value of measurement data of each of a plurality of sections of the electrode sheet ES, a judgement value, and a start coordinate and an end coordinate of each of the plurality of sections of the electrode sheet ES. The compressed measurement data PMD may further include a timestamp indicating a date and time when the measurement data of the plurality of sections is collected, the measuring device ID, and the equipment ID.

The processor 131P may be configured to calculate a representative value of the measurement data of each of the plurality of sections of the electrode sheet ES. The representative value of the measurement data of each of the plurality of sections of the electrode sheet ES may include at least one of an average, a standard deviation, a measurement data, a maximum value, or a minimum value of the measurement data of each of the plurality of sections.

For example, when the coordinate-related measurement data includes 1,500 measured values corresponding to one scanning performed by the sensing part 131S, the compressed measurement data PMD may include a single representative value calculated based on the 1,500 measured values. Accordingly, a size of the compressed measurement data PMD may be different from a size of the coordinate-related measurement data. The size of the compressed measurement data PMD may be less than the size of the coordinate-related measurement data. The start coordinate and end coordinate of the compressed measurement data PMD are substantially the same as the start coordinate and end coordinate of the corresponding coordinate-related measurement data.

The server 170, which will be described below, performs various tasks for managing the production of a secondary battery, in addition to generating a roll map. According to example embodiments, the server 170 may generate a roll map based on the compressed measurement data PMD instead of the coordinate-related measurement data substantially the same in size as the raw measurement data, thus reducing resources of the server 170 to be allocated to generate and store the roll map. Accordingly, continuous manufacturing management may be provided by the server 170, and the reliability in the manufacture of a secondary battery may improve.

A judgement value for the plurality of sections of the electrode sheet ES may be determined by processing the measurement data by a set method. When an amount of the measured coating material on the electrode sheet ES (e.g., the loading amount on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the loading amount on the electrode sheet ES or the thickness of the electrode sheet ES) is less than the lower limit or greater than the upper limit.

As another example, a measured value (or a representative value) that is in a first range may be determined as normal, a measured value (or a representative value) that is in a second range greater than the first range may be determined as excessive, a measured value (or a representative value) that is in a third range greater than the second range may be determined as very excessive, a measured value (or a representative value) that is in a fourth range less than the first range may be determined as insufficient, and a measured value (or a representative value) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

The processor 131P may be configured to transmit the compressed measurement data PMD to the first controller 141. The processor 133P may be configured to transmit the inspection data ID to the first controller 141. The first controller 141 may be configured to generate (or collect) coordinate-related inspection data CID based on the inspection data ID and the coordinate data CD. Similar to the coordinate-related measurement data, the coordinate-related inspection data CID may be provided by calibrating the coordinate data CD based on an offset length and connecting the calibrated coordinate data CD with the inspection data ID but embodiments are not limited thereto. For example, the first controller 141 may be configured to transmit the coordinate data CD to the processor 133P, and the processor 133P may generate (or collect) the coordinate-related inspection data CID.

Here, an offset length of the sensing part 133S may be defined as a length of the electrode sheet ES between a part of the electrode sheet ES detected by the sensing part 133S and the rewinder 113.

As another example, the processor 133P may receive coordinate data CD from the first controller 141, and the coordinate-related inspection data CID may be generated by the processor 133P based on the coordinate data CD and the inspection data ID.

The first controller 141 may be configured to collect top coating data TCD and bottom coating data BCD. Due to interruption of work, the top coating TC and the bottom coating BC may be formed discontinuously. For example, the coated lane LT may include a part, which includes the top coating TC, and a part, which does not include the top coating TC and from which the electrode plate EP is exposed. Similarly, the coated lane LB may include a part, which includes the bottom coating BC, and a part, which does not include the bottom coating BC and from which the electrode plate EP is exposed.

The top coating data TCD may be collected based on the exhaustion amount signal WAS and the top coating detection signal TCS, and the bottom coating data BCD may be collected based on the exhaustion amount signal WAS and the bottom coating detection signal BCS. Here, to collect the top coating data TCD and the bottom coating data BCD, the exhaustion amount signal WAS may be calibrated based on an offset length of the coating sensors 135T and 135B. The offset length of the coating sensors 135T and 135B may be defined as a length of the electrode sheet ES between a part of the electrode sheet ES detected by the coating sensors 135T and 135B and the rewinder 113.

The top coating data TCD may include a value indicating the top coating TC, and a start coordinate and an end coordinate of the top coating TC matching the value. For example, in a part of the top coating TC of FIG. 3, a start coordinate and an end coordinate are X1 and X2. Accordingly, the top coating data TCD may include the coordinates X1 and X2, and a value indicating the top coating TC matching the coordinates X1 and X2. As another example, in another part of the top coating TC of FIG. 3, a start coordinate and an end coordinate are X3 and X5. Accordingly, the top coating data TCD may include the coordinates X3 and X5, and a value indicating the top coating TC matching the coordinates X3 and X5.

The top coating data TCD may include a value indicating the absence of the top coating TC, and a start coordinate and an end coordinate of a part of the coated lane LT that does not include the top coating TC matching the value (a part of the coated lane LT from which the top surface EPT of the electrode plate EP is exposed). For example, a start coordinate of one of parts of the coated lane LT that do not include the top coating TC of FIG. 3 is X2 and an end coordinate thereof is X3. Accordingly, the top coating data TCD may include the coordinates X2 and X3, and a value indicating that there is no top coating TC matching the coordinates X2 and X3. As another example, a start coordinate of another one of the parts of the coated lane LT that do not include the top coating TC of FIG. 3 is X5 and an end coordinate thereof is X6. Accordingly, the top coating data TCD may include the coordinates X5 and X6, and a value indicating that there is no top coating TC matching the coordinates X5 and X6.

The bottom coating data BCD may include a value indicating the bottom coating BC, and a start coordinate and an end coordinate of the bottom coating BC matching the value. For example, in a part of the bottom coating BC of FIG. 3, a start coordinate and an end coordinate are X1 and X2. Accordingly, the bottom coating data BCD may include the coordinates X1 and X2, and a value indicating the bottom coating BC matching the coordinates X1 and X2. As another example, in another part of the bottom coating BC of FIG. 3, a start coordinate and an end coordinate are X4 and X6. Accordingly, the bottom coating data BCD may include the coordinates X4 and X6, and a value indicating the bottom coating BC matching the coordinates X4 and X6.

The bottom coating data BCD may include a value indicating the absence of the bottom coating BC, and a start coordinate and an end coordinate of a part of the coated lane LB that does not include the bottom coating BC (a part of the coated lane LB from which the bottom surface EPB of the electrode plate EP is exposed). For example, a start coordinate of a part of the coated lane LB that do not include the bottom coating BC of FIG. 3 is X2 and an end coordinate thereof is X4. Accordingly, the bottom coating data BCD may include the coordinates X2 and X4, and a value indicating there is no bottom coating BC matching the coordinates X2 and X4.

The first controller 141 may be configured to transmit the compressed measurement data PMD to the second controller 143. The second controller 143 may be configured to transmit the compressed measurement data PMD to the server 170. However, embodiments are not limited thereto, and the first controller 141 may directly transmit the compressed measurement data PMD to the server 170.

The second controller 143 may be configured to control operations of the unwinder 111, the rewinder 113, and the die coaters 115T and 115B. The second controller 143 may be configured to generate a signal for operating or stopping the unwinder 111, the rewinder 113, and the die coaters 115T and 115B. The signal for operating or stopping the unwinder 111, the rewinder 113, and the die coaters 115T and 115B may be generated based on electrode specification data, the compressed measurement data PMD, the coordinate-related inspection data CID, and the measurement signal MS.

The input device 150 may allow data to be input manually by an operator. For example, the input device 150 may include a human machine interface (HMI). The input device 150 may allow an operator to input data using an input tool, and a computer-based input of manufacturing data such as Excel file scrapping. Manual input data MID input by the input device 150 may include, for example, a length, start coordinate, and end coordinate of the electrode sheet ES that is cut for inspection of a sample of the electrode sheet ES, or a length, start coordinate, and end coordinate of the electrode sheet ES that is lost due to the exchange of lots (i.e., due to loading of a new electrode roll ER1).

The compressed measurement data PMD, the coordinate-related inspection data CID, the top coating data TCD, the bottom coating data BCD, and the manual input data MID may be transmitted to the server 170 via the server 160. The server 160 may be, for example, a server for log data-based communication. The server 160 may be a program for communication between the second controller 143 and the server 170 for manufacturing management. The server 160 may be implemented by hardware. A language and protocol of the server 170 may be different from a language and protocol of the second controller 143. For example, the language of the server 170 may be SQL, and the language of the second controller 143 may be a ladder diagram.

The server 160 may be configured to convert the electrode specification data transmitted from the server 170 into the language of the second controller 143. In addition, server 160 may be configured to convert the compressed measurement data PMD, the coordinate-related inspection data CID, the top coating data TCD, the bottom coating data BCD, and the manual input data MID into the language of the server 170, and write the converted compressed measurement data PMD, coordinate-related inspection data CID, top coating data TCD, bottom coating data BCD, and manual input data MID to the database of the server 170.

The electrode specification data may include model information and a recipe of the electrode sheet ES. The electrode specification data may include all matters related to the processing of the electrode sheet ES, such as process conditions, including the number of lots to be processed in a current process, the number of coated lanes to be formed on the electrode sheet ES, temperature, humidity, pressure, etc., and process parameters, including a moving speed of the electrode sheet ES, a discharge amount of a coating die, pressure of pressure rolls, etc.

For control of a process, a communication line may be installed between the second controller 143 and the server 170 to connect the second controller 143 and the server 170 via the server 160. Accordingly, data transmission through the second controller 143 may reduce resources required for the installation of the communication line and ensure efficient data processing and management, compared to a case in which the first and second rotary encoders 121 and 123 and the measuring device 131 directly transmit the input amount signal UWS, the exhaustion amount signal WS, and the measurement signal MS to the server 170 and a case in which the first controller 141 directly transmits the compressed measurement data PMD to the server 170.

According to example embodiments, the server 170 may be a data processing system that supports all activities required to manage the manufacture of a secondary battery, such as work schedule management, work instructions, quality control, and work performance aggregation. The server 170 may be, for example, a manufacturing execution system (MES). The server 170 may be configured to perform inputting, processing, outputting, and communication of data necessary to perform an electrode manufacturing process, including the coating process, the roll pressing process, and the slitting process.

The server 170 may be configured to generate a roll map. The roll map may include data about specifications of a lot. The specifications of the lot may include, for example, a lot number, a length of the wound electrode sheet ES, a width of the electrode sheet ES, and materials and a composition used to process the electrode sheet ES.

The roll map may represent the electrode sheet ES based on coordinates indicating a position on the electrode sheet ES. As described above, a secondary battery manufacturing process may be performed on the electrode sheet ES. The roll map may indicate a history of processes performed on the electrode sheet ES and include data related to coordinates. Accordingly, the roll map enables feedback, feedforward, and tracking of a secondary battery manufacturing process as described below.

The roll map may include event data indicating events of a roll-to-roll process of the electrode sheet ES. Generally, the event data is generated according to the progress of the process and thus is time series data. Accordingly, data of process events may include a value indicating the events and a time value matched thereto. The time series data may be temporally ordered. Temporal ordering is a main feature of time series data and should be understood as organizing events in an order in which they occur and arrive to be processed. That is, the time series data may be stored based on a point in time when an event occurs (i.e., when inspection and measurement are performed or when an action of a process is performed), and the event may be matched to time values.

The manufacture of a secondary battery involves a series of different processes, and a leading process affects the following process. Feed forward should be hereinafter understood as correcting the following process based on data generated according to a result of the leading process. In this case, when time series data of the leading process does not directly match a workpiece, an intermediate product, and a product of the real world, it is difficult to reflect the time series data of the leading process in the following process. Here, the workpiece is an article provided as a result of each process, e.g., an electrode sheet of FIG. 1 on which the coating process, the roll press process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product is an article processed by the activation process to be operable as a secondary battery. The above-described definitions of the workpiece, the intermediate product, and the product are definitions thereof only in one aspect and thus should not be understood as excluding general definitions thereof.

For feedforward, time series data should be related to positions on workpieces, components, intermediate products, and products of the real world. In the roll map, time series data such as measurement data may be related to coordinate data CD based on the amount of movement (i.e., the amount of input or the amount of exhaustion) of the electrode sheet ES. The roll map may allow the time series data to be connected with coordinate data including coordinates of the positions on the workpieces, the components, the intermediate products, and the products of the real world. Accordingly, the generation of the roll map and feedforward based on the roll map may improve the efficiency of production and quality by digitizing and objectifying aspects of a process that depend on an operator's discretion.

Roll maps may be generated in units of lots. The electrode sheet ES may be wound into the second electrode roll ER2, and the second electrode roll ER2 may be cut and separated from the electrode sheet ES connected to the first electrode roll ER1 after a target amount of winding is reached. A lot is a production unit of the roll-to-roll process, and the second electrode roll ER2 separated from the electrode sheet ES is an example of the lot. Accordingly, the server 170 may be configured to store a roll map of a previous process. The roll map of the previous process may correspond to the first electrode roll ER1. In addition, the server 170 may be configured to generate and store a roll map of a current process. The roll map of the current process may correspond to the second electrode roll ER2.

A roll map of a preceding lot may be used to improve a process of a following lot, and this operation may be referred to as process feedback. The process feedback using the roll map may include identifying process conditions and process parameters that cause a problem and a defect, based on data included in the roll map.

Furthermore, roll maps may be cumulatively generated for workpieces, intermediate products, and products of unit processes to track process history of products (e.g., battery cells, battery modules, or battery packs) on the market. For example, a battery cell may include a cell identifier (ID) on an electrode assembly or a case. The cell ID may match lot numbers and coordinate information of electrodes and a separator included in the battery cell. In other words, the cell ID may be related to a roll map of the electrodes and the separator included in the battery cell. Accordingly, when an event such as a quality issue occurs in a battery cell on the market, a history of collective data of the manufacture of the battery cell may be retrieved based on the cell ID.

The server 170 may provide production management based on data of the roll map, such as the compressed measurement data PMD, the coordinate-related inspection data CID, the top coating data TCD, the bottom coating data BCD, and the manual input data MID. The server 170 may be configured to determine or calculate, for example, the amount of production of the coating process, the amount of good-quality products, the amount of defects, and the amount of loss.

Here, the amount of production of the coating process may be determined based on actual performance of the coating process by the die coaters 115T and 115B. For example, when a plurality of defects occur (i.e., defects occur in a long line on the electrode sheet ES) during the coating process, coating of the electrode sheet ES may be stopped and the electrode sheet ES may be moved. Accordingly, the coated lane LT may include a discontinuous top coating TC and the coated lane LB may include a discontinuous bottom coating BC on the top surface EST and the bottom surface ESB of the electrode sheet of FIG. 3. The amount of production may refer to a length of the electrode sheet ES on which the coating process is performed on the top or bottom surface EPT or EPB of the electrode plate EP.

For example, a part of the electrode sheet ES between a start coordinate X1 and an end coordinate X2 includes the top coating TC on the top surface EPT of the electrode plate EP and the bottom coating BC on the bottom surface EPB of the electrode plate EP and thus may be added to the amount of production.

A part of the electrode sheet ES between a start coordinate X2 and an end coordinate X3 does not include the top coating TC, resulting in exposure of the top surface EPT of the electrode plate EP and does not include the bottom coating BC, resulting in exposure of the bottom surface EPB of the electrode plate EP, and thus may be excluded from the amount of production. This is because the coating process is not performed on each of the top surface EPT and bottom surface EPB of the electrode plate EP.

A part of the electrode sheet ES between a start coordinate X3 and an end coordinate X4 does not include the bottom coating BC, resulting in exposure of the bottom surface EPB of the electrode plate EP but includes the top coating TC on the top surface EPT of the electrode plate EP and thus may be added to the amount of production.

For example, a part of the electrode sheet ES between a start coordinate X4 and an end coordinate X5 includes the top coating TC on the top surface EPT of the electrode plate EP and the bottom coating BC on the bottom surface EPB of the electrode plate EP and thus may be added to the amount of production.

A part of the electrode sheet ES between a start coordinate X5 and an end coordinate X6 does not include the top coating TB, thus resulting in exposure of the top surface EPT of the electrode plate EP but includes the bottom coating BC on the bottom surface EPB of the electrode plate EP and thus may be added to the amount of production.

Accordingly, the amount of production of the electrode sheet ES of FIG. 3 may be expressed by Equation 1 below.

[Equation 1]

$$\text{amount of production} = X6 - X1 - (X3 - X2)$$

The amount of good-quality products may be calculated by subtracting the amount of defects and the amount of loss from the amount of production. Accordingly, the relationship among the amount of production, the amount of good-quality products, the amount of defects, and the amount of loss may be expressed by Equation 2 below. Accordingly, the server 170 is an example of production management based on a roll map and may be configured to automatically calculate the amount of good-quality products in the coating process.

[Equation 2]

$$\text{amount of production} = \text{amount of good-quality products} + \text{amount of defects} + \text{amount of loss}$$

A part of the electrode sheet ES corresponding to the amount of defects and the amount of loss may be removed in a subsequent process or separated from a normal part of the electrode sheet ES. The amount of defects and the amount of loss may be referred to collectively as the amount of exclusion. That is, the amount of exclusion may satisfy Equations 3 and 4 below.

[Equation 3]

amount of exclusion=amount of defects+amount of loss

[Equation 4]

amount of production-amount of exclusion=amount of good-quality products

As another example, according to example embodiments, the server 170 may be a statical process controller (SPC). The server 170 may manage the quality of processing the electrode sheet ES by continuously monitoring the processing of the electrode sheet ES based on original inspection data and/or measurement data. The server 170 may collect and analyze manufacturing data in almost real time to identify problematic conditions in a timely manner and provide a notification to an operator before potential problems occur.

As another example, the server 170 may be a data warehouse configured to store data of the roll map, such as the compressed measurement data PMD, the coordinate-related inspection data CID, the top coating data TCD, the bottom coating data BCD, and the manual input data MID, for a long time.

The client device 180 may be configured to transmit an API request to the server 170 to inquire information about the roll map. The server 170 may be configured to transmit a uniform resource locator (URL) (or a schema) including a source code for displaying the roll map on the client device 180 to the client device 180 in response to the API request from the client device 180. The client device 180 may access the source code for visualizing and displaying the roll map through the URL (or schema).

The client device 180 may be a device, e.g., a mobile device, such as a workstation computer, a laptop computer, a desktop computer, a tablet PC or a smart phone, or a wearable device, for communication with the server 170. The client device 180 may include input tools for inputting the API request and a display device displaying the roll map.

The processors 131P and 133P and the servers 160 and 170 may be implemented by hardware, firmware, software, or a combination thereof. For example, the processors 131P and 133P and the servers 160 and 170 may include a computing device such as a workstation computer, a desktop computer, a laptop computer, and a tablet computer. The processors 131P and 133P and the servers 160 and 170 may include a simple controller, a complex processor such as a microprocessor, a CPU, or a GPU, a processor configured by software, dedicated hardware, or firmware. The processors 131P and 133P and the servers 160 and 170 may be implemented, for example, by a general-purpose computer or application-specific hardware such as a digital signal processor (DSP), a field programmable gate array (FPGA), or an application specific integrated circuit (ASIC).

The servers 160 and 170 may include a physical server or a cloud server. The servers 160 and 170 may provide data and an analysis result to an operator through various frameworks. A framework may include a protocol that supports data transmission so that a client device may visualize data through a user interface and provide updated visualization when new data is calculated by the server 170. The protocol supporting data transmission may include HTML, JavaScript, and/or JSON.

The servers 160 and 170 may include various types of application programming interfaces (APIs) for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

According to some embodiments, the processors 131P and 133P and the servers 160 and 170 may be operated by instructions stored in a machine-readable medium that may be read and executed by one or more processors. Here, the machine-readable medium may include an arbitrary mechanism for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processors 131P and 133P and the servers 160 and 170 may be configured by firmware, software, routines, and instructions for performing the above-described operation or a process described below. For example, the processors 131P and 133P and the servers 160 and 170 may be instantiated in a memory.

However, the instantiation of the processors 131P and 133P and the servers 160 and 170 is only an example provided for convenience of description, and the processors 131P and 133P and the servers 160 and 170 may be operated by a computing device, distributed computing devices, a processor, or other types of devices for execution of firmware, software, routines, and instructions.

The secondary battery manufacturing system 100 may implement a plug-in architecture with an API for obtaining data to provide a plug-and-play connection among the measuring device 131, the inspector 133, and the coating sensors 135T and 135B. Accordingly, resources in a certain process step and a specific site can be easily transferred to a different process and a different site or new resources can be easily introduced into each process step and each site.

A data network between the components of the secondary battery manufacturing system 100 may include various types of communication channels including unidirectional and bidirectional wired and wireless communications. For example, the data network may include an industrial protocol network such as OPC, Modbus, or ProfiNet. The communication channel may be dedicated conduit communication such as universal serial bus (USB), IEEE 802 (Ethernet), IEEE 1394 (FireWire), or other high-speed data communication standards.

An architecture configured to generate the roll map and the intermediate roll map may be implemented by adding only the first controller 141 to elements essential in a modern process management system. That is, a system according to example embodiments is capable of using resources of an already-installed manufacturing site and reducing additional capital expenditure. In addition, applying the same architecture as existing manufacturing equipment to newly constructed manufacturing equipment may lead to improvement of the reliability of the manufacture of a secondary battery, detection/improvement of problematic processes, and effective introduction of new processes.

(Second Embodiment)

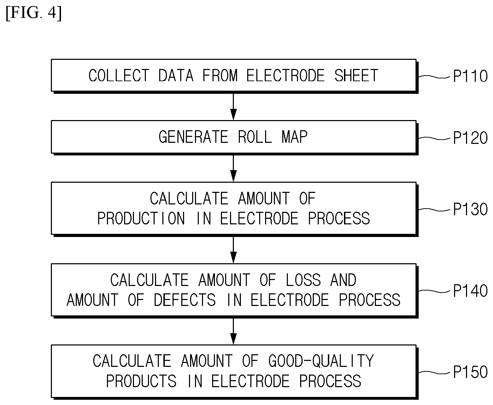

FIG. 4 is a flowchart of a secondary battery manufacturing method according to example embodiments.

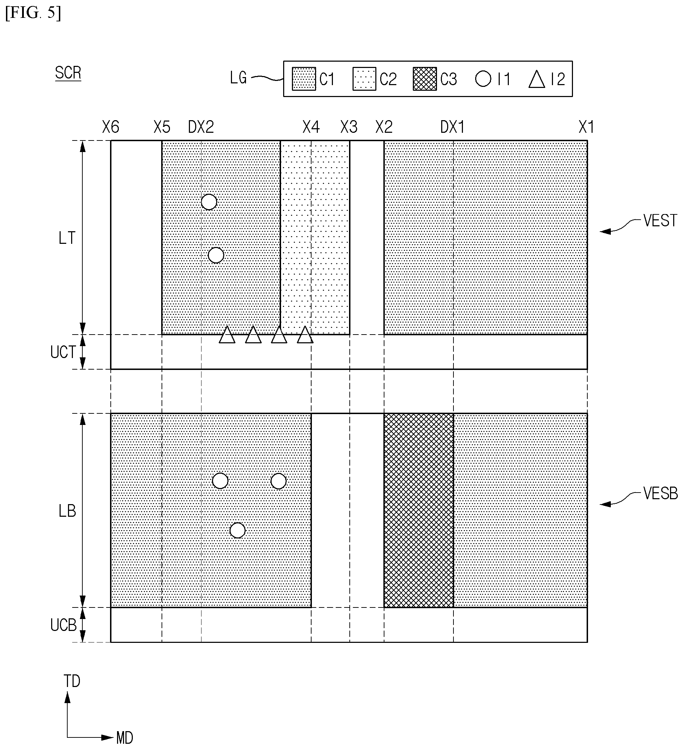

FIG. 5 illustrates a picture SCR displayed on a client device 180.

Referring to FIGS. 1 and 4, in P110, data may be collected from the electrode sheet ES. The data of the electrode sheet ES may be data for evaluating the coating process performed on the electrode sheet ES. The data of the electrode sheet ES may include data related to coordinates, e.g., the compressed measurement data PMD, the coordinate-related inspection data CID, the top coating data TCD, the bottom coating data BCD, and the manual input data MID. The data of the electrode sheet ES may be data for generating a roll map.

Next, in P120, a roll map may be generated. The generation of the roll maps may include collectively storing, processing, modulating, and transmitting the compressed measurement data PMD, the coordinate-related inspection data CID, the top coating data TCD, the bottom coating data BCD, and the manual input data MID based on coordinates thereof, and generating a URL for accessing the above data. The types of defects may be aligned spatially (i.e., based on the coordinates) by collectively storing, processing, modulating, and transmitting the compressed measurement data PMD, the coordinate-related inspection data CID, the top coating data TCD, the bottom coating data BCD, and the manual input data MID. Accordingly, it is possible to prevent the lengths of parts of the electrode sheet ES corresponding to defects of the electrode sheet ES from being repeatedly added when the amount of the defects is calculated.

Next, referring to FIGS. 1, 4, and 5, in P130, an amount of production of the electrode process (e.g., the coating process) may be calculated. The calculation of the amount of production of the coating process is substantially the same as that described above with reference to FIGS. 1 to 3.

Thus, in P140, the amount of loss and the amount of defects in the electrode process (e.g., the coating process) may be calculated.

The amount of loss of the electrode sheet ES may include a part determined based on the manual input data MID and a portion determined based on the top coating data TCD and the bottom coating data BCD. For example, the amount of loss due to sample inspection and removal of residual quantity may be determined based on the manual input data MID.

In addition, when the coating process is not performed on each of the top and bottom surfaces EPT and EPB of the electrode plate EP, energy density of the cut electrode sheet ES decreases and thus a part of the electrode sheet ES that includes only one of the top coating TC and the bottom coating BC may not be used in an actual product (i.e., an electrode assembly). Accordingly, the part of the electrode sheet ES that includes only one of the top coating TC and the bottom coating BC may be added to the amount of loss of the electrode sheet ES.

For example, a part of the electrode sheet ES between a start coordinate X3 and an end coordinate X4 does not include the bottom coating BC and includes the top coating TC and thus may be added to the amount of loss of the electrode sheet ES. For example, a part of the electrode sheet ES between a start coordinate X5 and an end coordinate X6 does not include the top coating TC and includes the bottom coating BC and thus may be added to the amount of loss of the electrode sheet ES.

Data of the roll map, such as the compressed measurement data PMD, the coordinate-related inspection data CID, the top coating data TCD, the bottom coating data BCD, and the manual input data MID, may be visualized on a visualized top surface VEST and a visualized bottom surface VESB of the electrode sheet ES displayed in the picture SCR.

The picture SCR may include a legend LG representing elements of the visualized roll map. As shown in the legend LG of FIG. 5, a color C1 indicates that measurement amounts on the electrode sheet (e.g., a loading amount, a thickness, etc.) on the electrode sheet ES is normal, a color C2 indicates that the measurement amounts on the electrode sheet (e.g., the loading amount, the thickness, etc.) on the electrode sheet ES is insufficient, and a color C3 indicates that the measurement amounts on the electrode sheet (e.g., the loading amount, the thickness, etc.) on the electrode sheet ES is excessive. An indicator I1 represents an appearance defect of the electrode sheet ES, and an indicator I2 represents an appearance defect of an insulating layer on the electrode sheet ES.

Here, the appearance defect may be a defect determined by an image-based inspection device such as machine vision. The insulating layer is an insulating material applied to a boundary of the coated lane L1.

The amount of defects may be determined from a part of the electrode sheet ES that is not included in the calculation of the amount of loss. That is, the amount of defects may be determined from a part of the electrode sheet including each of the top coating TC and the bottom coating BC.

Some defects may overlap in the transverse direction TD. The amount of defects is a substantial length of a part of the electrode sheet ES that includes defects and thus the defects may not be added redundantly even when the defects overlap in the transverse direction TD.

In FIG. 5, coordinates DX1 and DX2 are additionally displayed to describe the calculation of the amount of defects. A part of the electrode sheet ES between the coordinate DX1 and the coordinate X2 includes the top coating TC and the bottom coating BC, and includes defects due to an excessive amount of measurement. Accordingly, the part of the electrode sheet ES between the coordinate DX1 and the coordinate X2 may be added in the calculation of the amount of defects.

A part of the electrode sheet ES between a coordinate X3 and a coordinate X4 includes the top coating TC and does not include the bottom coating BC and thus may not be added in the calculation of the amount of defects. Similarly, a part of the electrode sheet ES between a coordinate X5 and a coordinate X6 includes the bottom coating BC and does not include the top coating TC and thus may not be added in the calculation of the amount of defects.

A part of the electrode sheet ES between the coordinate X4 and the coordinate DX2 may include a plurality of defects overlapping in the transverse direction TD. The part of the electrode sheet ES between the coordinate X4 and the coordinate DX2 includes the top coating TC and the bottom coating BC and thus may be added in the calculation of the amount of defects.

A part of the electrode sheet ES between a coordinate X1 and the coordinate DX2 and a part of the electrode sheet ES between the coordinate DX2 and the coordinates X5 are normal and thus may not be added in the calculation of the amount of defects.

Next, in P150, the amount of good-quality products in the electrode process (e.g., the coating process) may be calculated. The amount of good-quality products in the coating process may be calculated based on an amount of production, the amount of loss, and the amount of defects. More specifically, the amount of good-quality products in the coating process may be calculated by subtracting the amount of exclusion of the coating process (i.e., the sum of the amount of loss and the amount of defects) from the amount of production of the coating process.

As described above, based on data of a roll map, the server 170 may be configured to determine the amount of production, the amount of defects, and the amount of good-quality products of the electrode sheet ES, and thus, the performance of production (i.e., the amount of good-quality products) of the electrode sheet ES may be determined automatically with high precision.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

**Claims**

1. A secondary battery manufacturing method comprising:

   collecting data from an electrode sheet on which an electrode process is performed;
   calculating an amount of production corresponding to a length of a part of the electrode sheet on which the electrode process is performed; and
   calculating an amount of loss and an amount of defects of the electrode sheet.

2. The secondary battery manufacturing method of claim 1, wherein

   the electrode process includes forming a top coating on a top surface of an electrode plate of the electrode sheet and a bottom coating on a bottom surface of the electrode plate opposite to the top surface, and
   parts of the electrode sheet spaced apart from the top coating and the bottom coating are excluded from the amount of production.

3. The secondary battery manufacturing method of claim 1, wherein

the electrode process includes forming a top coating on a top surface of an electrode plate of the electrode sheet and a bottom coating on a bottom surface of the electrode plate opposite to the top surface, and
a part of the electrode sheet that includes either the top coating or the bottom coating is added to the amount of production.

4. The secondary battery manufacturing method of claim 1, wherein

the electrode process includes forming a top coating on a top surface of an electrode plate of the electrode sheet and a bottom coating on a bottom surface of the electrode plate opposite to the top surface, and
a first part of the electrode sheet including the top coating and spaced apart from the bottom coating is added to the amount of loss.

5. The secondary battery manufacturing method of claim 1, wherein

the electrode process includes forming a top coating on a top surface of an electrode plate of the electrode sheet and a bottom coating on a bottom surface of the electrode plate opposite to the top surface, and
a second part of the electrode sheet spaced apart from the top coating and including the bottom coating is added to the amount of loss.

6. The secondary battery manufacturing method of claim 1, wherein
the amount of defects corresponds to a length of a part of the electrode sheet including defects.

7. The secondary battery manufacturing method of claim 1, wherein

the amount of defects is calculated based on compressed measurement data of the electrode sheet, and
the compressed measurement data includes a judgement value calculated based on raw measurement data and coordinates matching the judgement value.

8. The secondary battery manufacturing method of claim 1, wherein

the amount of defects is calculated based on coordinate-related inspection data of the electrode sheet, and
the coordinate-related inspection data includes a judgement value indicating a defect and coordinates matching the judgement value.

9. The secondary battery manufacturing method of claim 1, further comprising
calculating an amount of good-quality products, which corresponds to a length of a normal part of the electrode sheet, based on the amount of production, the amount of loss, and the amount of defects of the electrode sheet.

10. The secondary battery manufacturing method of claim 9, wherein
the sum of the amount of good-quality products, the amount of loss, and the amount of defects is equal to the amount of production.

11. A secondary battery manufacturing method comprising:

collecting data from an electrode sheet on which a coating process is performed, wherein in the coating process, a top coating is formed on a top surface of an electrode plate of the electrode sheet and a bottom coating is formed on a bottom surface of the electrode plate of the electrode sheet, and the data includes top coating data indicating the top coating, bottom coating data indicating the bottom coating, and coordinate-related inspection data of the electrode sheet;
calculating an amount of production based on the top coating data and the bottom coating data;
calculating an amount of exclusion of the electrode sheet; and
calculating an amount of good-quality products, which is an amount of a normal part of the electrode sheet, based on the amount of production and the amount of exclusion.

12. The secondary battery manufacturing method of claim 11, wherein
a part of the electrode sheet that includes the top coating or the bottom coating is added to the amount of production.

13. The secondary battery manufacturing method of claim 11, wherein

a part of the electrode sheet that only includes one of the top coating and the bottom coating is added to the amount of exclusion.

14. The secondary battery manufacturing method of claim 11, wherein

the coordinate-related inspection data includes a judgement value indicating a defect and coordinates matching the judgement value, and
an amount of defects is added to the amount of exclusion, wherein the amount of defects corresponds to a length of a part of the electrode sheet including defects and is calculated based on the coordinate-related inspection data.

[FIG. 1]

[FIG. 2]

ES

[FIG. 3]

[FIG. 4]

```
┌─────────────────────────────────────────────┐
│      COLLECT DATA FROM ELECTRODE SHEET       │──P110
└─────────────────────────────────────────────┘
                      │
                      ▼
┌─────────────────────────────────────────────┐
│               GENERATE ROLL MAP              │──P120
└─────────────────────────────────────────────┘
                      │
                      ▼
┌─────────────────────────────────────────────┐
│             CALCULATE AMOUNT OF              │──P130
│        PRODUCTION IN ELECTRODE PROCESS       │
└─────────────────────────────────────────────┘
                      │
                      ▼
┌─────────────────────────────────────────────┐
│          CALCULATE AMOUNT OF LOSS AND        │──P140
│      AMOUNT OF DEFECTS IN ELECTRODE PROCESS  │
└─────────────────────────────────────────────┘
                      │
                      ▼
┌─────────────────────────────────────────────┐
│      CALCULATE AMOUNT OF GOOD-QUALITY        │──P150
│         PRODUCTS IN ELECTRODE PROCESS        │
└─────────────────────────────────────────────┘
```

[FIG. 5]

## INTERNATIONAL SEARCH REPORT

| International application No. |
| --- |
| **PCT/KR2024/011361** |

| A. | CLASSIFICATION OF SUBJECT MATTER |
| --- | --- |

**H01M 4/04**(2006.01)i; **G06Q 50/04**(2012.01)i; **B65H 43/04**(2006.01)i

According to International Patent Classification (IPC) or to both national classification and IPC

| B. | FIELDS SEARCHED |
| --- | --- |

Minimum documentation searched (classification system followed by classification symbols)

H01M 4/04(2006.01); B05C 11/00(2006.01); B05C 11/10(2006.01); B21B 1/30(2006.01); H01M 10/04(2006.01); H01M 10/0587(2010.01); H01M 10/48(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 생산량(product yield), 손실량(loss yield), 불량량(error yield), 롤맵 (roll map), 이차전지(secondary battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2020-0011228 A (LG CHEM, LTD.) 03 February 2020 (2020-02-03)<br>See paragraphs [0023]-[0028] and [0035]-[0050]. | 1-14 |
| A | JP 2003-323886 A (MATSUSHITA ELECTRIC INDUSTRIAL CO., LTD.) 14 November 2003 (2003-11-14)<br>See paragraphs [0009]-[0019]. | 1-14 |
| A | CN 110911763 A (TIANJIN LISHEN BATTERY JOINT-STOCK CO., LTD.) 24 March 2020 (2020-03-24)<br>See claims 1-4. | 1-14 |
| A | JP 2021-051906 A (PRIMEARTH EV ENERGY CO., LTD.) 01 April 2021 (2021-04-01)<br>See entire document. | 1-14 |
| A | KR 10-2019-0010078 A (LG CHEM, LTD.) 30 January 2019 (2019-01-30)<br>See entire document. | 1-14 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 November 2024** | **06 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011361**

| Patent document cited in search report | | | Publication date (day/month/year) | Patent family member(s) | | | Publication date (day/month/year) |
|---|---|---|---|---|---|---|---|
| KR | 10-2020-0011228 | A | 03 February 2020 | KR | 10-2675980 | B1 | 14 June 2024 |
| JP | 2003-323886 | A | 14 November 2003 | JP | 4090781 | B2 | 28 May 2008 |
| CN | 110911763 | A | 24 March 2020 | CN | 110911763 | B | 02 December 2022 |
| JP | 2021-051906 | A | 01 April 2021 | JP | 7271382 | B2 | 11 May 2023 |
| KR | 10-2019-0010078 | A | 30 January 2019 | CN | 110024181 | A | 16 July 2019 |
| | | | | CN | 110024181 | B | 22 February 2022 |
| | | | | EP | 3550637 | A2 | 09 October 2019 |
| | | | | EP | 3550637 | B1 | 04 October 2023 |
| | | | | KR | 10-2142551 | B1 | 07 August 2020 |
| | | | | US | 11495783 | B2 | 08 November 2022 |
| | | | | US | 2019-0319256 | A1 | 17 October 2019 |
| | | | | US | 2023-0032166 | A1 | 02 February 2023 |
| | | | | WO | 2019-017607 | A2 | 24 January 2019 |

Form PCT/ISA/210 (patent family annex) (July 2022)

**EP 4 641 648 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230102897